# FASCICULE DE BREVET EUROPEEN

(11) **EP 3 999 801 B1**
(45) Date de publication et mention de la délivrance du brevet: **19.04.2023**
(21) Numéro de dépôt: 20743655.1
(22) Date de dépôt: 17.07.2020
(51) Int. Cl.: F42B 19/36, F42B 19/00, F41F 3/10, B63G 8/32

(54) **DÉTECTEUR DE LANCEMENT D'UN PROJECTILE, PROJECTILE ET ENSEMBLE DE LANCEMENT ASSOCIÉS**
GESCHOSSABSCHUSSDETEKTOR SOWIE ZUGEHÖRIGES GESCHOSS UND ABSCHUSSANORDNUNG
PROJECTILE LAUNCH DETECTOR, AND ASSOCIATED PROJECTILE AND LAUNCHER ASSEMBLY

(30) Priorité: 18.07.2019 FR 1908108
(43) Date de publication de la demande: 25.05.2022
(73) Titulaire: Naval Group, 75015 Paris (FR)
(72) Inventeur: DE SARRAN, Thibaut, 83580 GASSIN (FR); DEGUIN, Quentin, 83580 GASSIN (FR); NUYTEN, Pierre, 83580 GASSIN (FR)
(74) Mandataire: Lavoix
(86) Numéro de dépôt international: PCT/EP2020/070295
(87) Numéro de publication internationale: WO 2021/009350

(56) Documents cités:
- FR-A- 802 587
- JP-A- S58 112 893
- SE-B- 335 487
- US-A- 2 342 523

## Description

La présente invention concerne un détecteur de lancement d'un projectile, notamment en milieu sous-marin. Un tel détecteur est connu du SE 335 487 B.

De manière classique, pour des raisons de sécurité, les projectiles sous-marins de type torpilles sont lancées alors que leur système de propulsion est à l'arrêt. Le déclenchement de la propulsion nécessite donc que le lancement de ladite torpille soit détecté.

Par ailleurs, certains types de projectiles sous-marins sont récupérés en mer après une mission. Afin de permettre à des opérateurs de les approcher sans danger, il est utile de déterminer si la vitesse du projectile est supérieure ou inférieure à une vitesse spécifique.

La présente invention a pour but de fournir un détecteur de lancement de projectile permettant de répondre à ces besoins, sans perturber le fonctionnement habituel du projectile correspondant.

A cet effet, l'invention a pour objet un détecteur de lancement de projectile, comprenant : un corps disposé selon un premier axe ; un mât s'étendant selon le premier axe, ledit mât comprenant une première et une seconde extrémités, respectivement disposées à l'intérieur et à l'extérieur du corps ; et une pale solidaire de la seconde extrémité du mât et s'étendant radialement par rapport audit mât, ladite pale comportant : une première et une deuxième faces opposées, parallèles au premier axe ; et une surface d'extrémité, sensiblement perpendiculaire au premier axe et opposée au corps. Le mât est apte à coulisser par rapport au corps selon le premier axe, entre une configuration rétractée et une configuration déployée, la pale étant axialement plus proche du corps dans la configuration rétractée que dans la configuration déployée. Le mât est en outre apte à pivoter par rapport au corps autour du premier axe, entre une première et une deuxième positions angulaires. Le détecteur comprend en outre : un premier élément de rappel élastique, tendant à ramener le mât en configuration déployée par rapport au corps ; un premier capteur, apte à déterminer si le mât est en configuration rétractée ou en configuration déployée ; un deuxième élément de rappel élastique, tendant à ramener le mât dans la première position angulaire par rapport au corps ; et un deuxième capteur, apte à déterminer si le mât est dans la première ou dans la deuxième position angulaire.

Suivant d'autres aspects avantageux de l'invention, le détecteur de lancement comporte l'une ou plusieurs des caractéristiques suivantes, prises isolément ou suivant toutes les combinaisons techniquement possibles :
- le premier élément de rappel élastique est un ressort de compression ;
- le deuxième élément de rappel élastique est un ressort de torsion ;
- les première et deuxième faces de la pale forment un angle non nul et préférentiellement inférieur ou égal à 25°.

L'invention se rapporte en outre à un projectile s'étendant selon un deuxième axe et comprenant : une surface latérale externe, sensiblement parallèle audit deuxième axe ; un élément de propulsion selon un sens de déplacement parallèle audit deuxième axe ; et un module électronique de commande et de contrôle, relié audit élément de propulsion. Ledit projectile comprend en outre un détecteur de lancement tel que décrit ci-dessus, le corps dudit détecteur étant fixe par rapport à la surface latérale externe dudit projectile, le premier axe étant sensiblement perpendiculaire au deuxième axe ; les premier et deuxième capteurs du détecteur de lancement étant reliés au module électronique. Le détecteur de lancement est configuré de sorte qu'en configuration déployée du mât, la surface d'extrémité de la pale forme une saillie par rapport à la surface latérale externe du projectile.

Suivant d'autres aspects avantageux de l'invention, le projectile comporte l'une ou plusieurs des caractéristiques suivantes, prises isolément ou suivant toutes les combinaisons techniquement possibles :
- le détecteur de lancement est configuré de sorte qu'en première position angulaire du mât, la première face de la pale est sensiblement perpendiculaire au deuxième axe et orientée vers l'avant, selon le sens de déplacement ;
- le projectile comprend : une coque s'étendant selon le deuxième axe ; et un aileron s'étendant radialement par rapport à une extrémité arrière de ladite coque ; la coque et/ou l'aileron comprenant la surface latérale externe ; ledit projectile étant apte à se déplacer en milieu sous-marin ;
- le corps du détecteur de lancement est inséré dans la coque et la seconde extrémité du mât est apte à coulisser dans une cavité interne de l'aileron entre les configurations rétractée et déployée.

L'invention se rapporte en outre à un ensemble de lancement comprenant : un projectile tel que décrit ci-dessus ; et un tube de lancement comprenant une chambre interne apte à contenir ledit projectile ; la chambre interne comprenant une surface interne configurée de sorte que, lorsque le projectile est reçu dans la chambre interne, la surface d'extrémité de la pale du détecteur de lancement est au contact de ladite surface interne, le mât du détecteur de lancement étant ainsi maintenu en configuration rétractée.

L'invention se rapporte en outre à un procédé de mise en oeuvre de l'ensemble de lancement décrit ci-dessus, comprenant les étapes suivantes : éjection du projectile hors du tube de lancement ; coulissement du mât du détecteur de lancement en configuration déployée ; détection dudit coulissement par le premier capteur et envoi d'un signal correspondant au module électronique ; mise en route de l'élément de propulsion par le module électronique.

L'invention se rapporte en outre à un procédé de fonctionnement du projectile décrit ci-dessus, comprenant les étapes suivantes : mise en route de l'élément de propulsion par le module électronique ; si le mât atteint la deuxième position angulaire par rapport au corps, détection par le deuxième capteur et envoi d'un signal correspondant au module électronique ; puis si le mât retrouve la première position angulaire par rapport au corps, détection par le deuxième capteur et envoi d'un signal correspondant au module électronique.

L'invention sera mieux comprise à la lecture de la description qui va suivre, donnée uniquement à titre d'exemple non limitatif et faite en se référant aux dessins sur lesquels :
- [Fig 1] la figure 1 est une vue schématique, en coupe partielle, d'un ensemble de lancement comprenant un projectile selon un mode de réalisation de l'invention ;
- [Fig 2] la figure 2 est une vue schématique partielle, en coupe, de l'ensemble de la figure 1 avec le projectile dans une première configuration ;
- [Fig 3] la figure 3 est une vue schématique partielle, en coupe, du projectile des figures 1 et 2 dans une deuxième configuration ; et
- [Fig 4] la figure 4 est un logigramme représentant un procédé de mise en oeuvre de l'ensemble de lancement et du projectile de la figure 1, selon un mode de réalisation de l'invention.

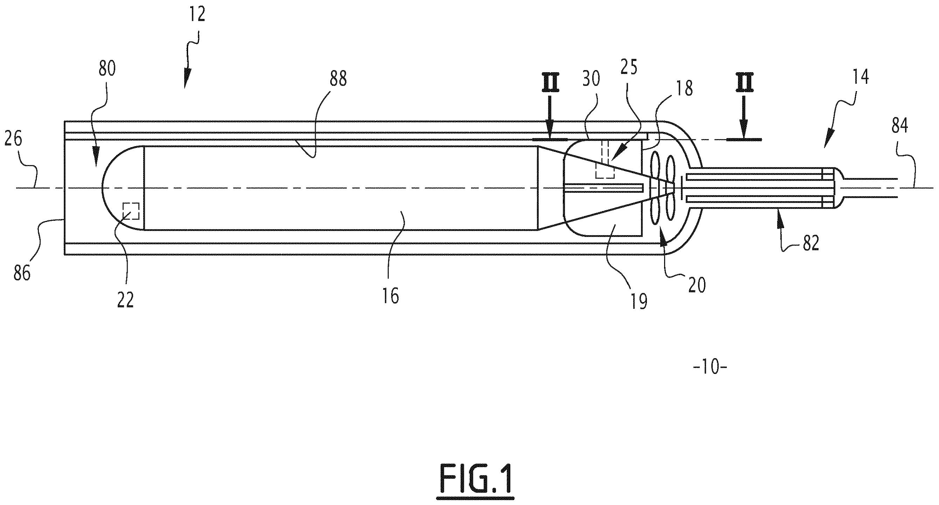

La figure 1 montre un ensemble de lancement 10 selon un mode de réalisation de l'invention. L'ensemble de lancement 10 est notamment destiné à équiper un navire, tel qu'un bâtiment de surface ou un sous-marin.

L'ensemble de lancement 10 est notamment destiné au lancement d'un projectile 12 en milieu sous-marin. L'ensemble de lancement 10 comporte le projectile 12 et un tube 14 de lancement.

Le projectile 12, par exemple une torpille, est apte à se déplacer en milieu sous-marin. Le projectile 12 comporte notamment une coque 16, un ou des ailerons 18, 19 et un élément de propulsion 20.

Le projectile 12 comporte également un système embarqué de commande et de contrôle, tel qu'un module électronique 22. Le module électronique 22 est de préférence apte à communiquer avec un poste de contrôle (non représenté), notamment par liaison radio. Ledit poste de contrôle est par exemple situé dans le navire équipé de l'ensemble de lancement 10.

Le projectile 12 comporte en outre un détecteur de lancement 25, qui sera décrit ultérieurement.

La coque 16 présente une forme longitudinale s'étendant selon un axe 26 de déplacement du projectile 12. L'élément de propulsion 20 est apte à déplacer le projectile 12 le long dudit axe 26, selon un sens de déplacement. L'élément de propulsion 20 est disposé à l'arrière de la coque 16 selon ledit sens de déplacement.

De préférence, l'élément de propulsion 20 comprend au moins une hélice apte à déplacer le projectile en milieu sous-marin, ainsi qu'un moteur apte à faire tourner l'au moins une hélice. Ledit moteur est relié au module électronique 22.

Dans le mode de réalisation représenté, le projectile 12 comporte plusieurs ailerons 18, 19 fixés à l'arrière de la coque 16 et régulièrement répartis autour de l'axe 26 de déplacement. Chaque aileron 18, 19 forme une saillie radiale par rapport à la coque 16.

Le projectile 12 comporte une surface latérale externe 30 apte à coopérer avec le tube de lancement 14, comme il sera décrit par la suite. La surface latérale externe est notamment formée par la coque 16 et/ou les ailerons 18, 19. Par « latérale », on entend que ladite surface latérale externe 30 est sensiblement parallèle à l'axe 26 de déplacement.

Dans le mode de réalisation représenté, ladite surface latérale externe est formée par un bord latéral 30 d'un aileron 18. Ledit bord latéral est sensiblement plan et orienté à l'opposé de l'axe 26 de déplacement.

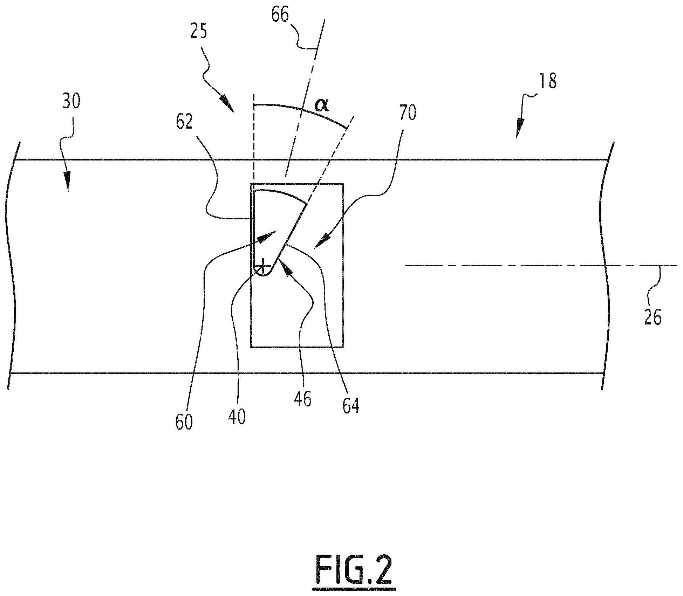

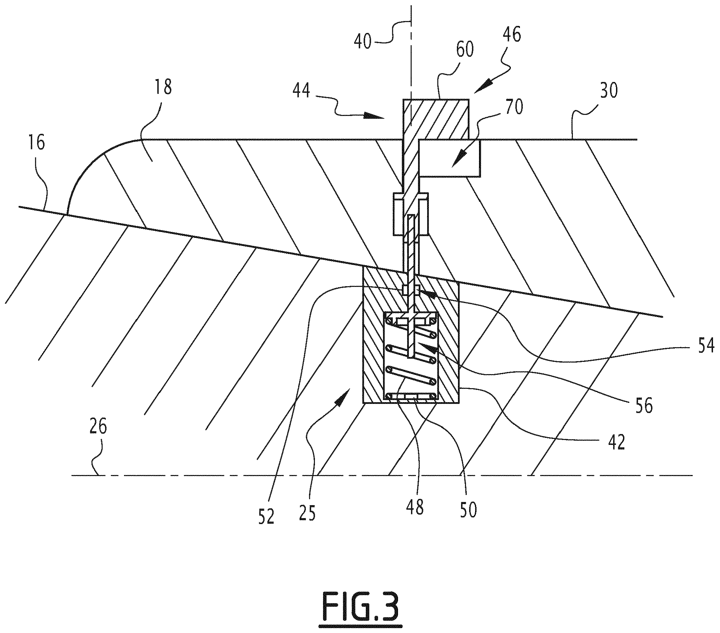

Le détecteur de lancement 25 du projectile 12, visible sur les figures 2 et 3, va maintenant être décrit.

Le détecteur de lancement 25 s'étend selon un axe principal 40 et comprend notamment un corps 42, un mât 44 et une pale 46.

Le détecteur 25 comprend en outre : un premier élément de rappel élastique 48 et un premier capteur 50 associé, ainsi qu'un deuxième élément de rappel élastique 52 et un deuxième capteur 54 associé.

Le corps 42 est creux, de forme sensiblement cylindrique. Le mât 44 s'étend selon l'axe principal 40 entre une première 56 et une seconde extrémités, respectivement disposées à l'intérieur et à l'extérieur du corps 42.

La première extrémité 56 du mât 44 est apte à coulisser à l'intérieur du corps 42 selon l'axe principal 40, entre une configuration rétractée, visible sur la figure 2, et une configuration déployée, visible sur la figure 3. Dans la configuration rétractée, la seconde extrémité du mât 44 est axialement plus proche du corps 42 que dans la configuration déployée.

Le premier élément de rappel élastique 48 exerce un effort axial sur le mât 44, tendant à ramener ledit mât 44 en configuration déployée par rapport au corps 42. Le premier élément de rappel élastique 48 est par exemple un ressort hélicoïdal de compression, reçu à l'intérieur du corps 42.

La pale 46 est solidaire de la seconde extrémité du mât 44 et disposée à l'extérieur du corps 42. La pale 46 s'étend radialement par rapport au mât 44.

La pale 46 comprend : une surface d'extrémité 60, sensiblement plane et perpendiculaire à l'axe principal 40 ; et une première 62 et une deuxième 64 faces latérales, parallèles à l'axe principal 40. La surface d'extrémité 60 est orientée à l'opposé du corps 42.

Dans le mode de réalisation représenté, comme visible sur la figure 2, la surface d'extrémité 60 a sensiblement la forme d'une portion de disque et les première 62 et deuxième 64 faces latérales forment un angle α non nul. De préférence, l'angle α est inférieur à 25° et plus préférentiellement compris entre 15° et 20°.

La figure 2 montre un plan médian 66 de la pale 46, passant par l'axe principal 40 à égale distance des première 62 et deuxième 64 faces latérales.

Selon une variante non représentée, les première et deuxième faces latérales de la pale sont sensiblement parallèles.

Le mât 44 et la pale 46 sont aptes à pivoter par rapport au corps 42 autour de l'axe principal 40, entre une première position angulaire, visible sur la figure 2, et une deuxième position angulaire, visible sur la figure 3.

Le deuxième élément de rappel élastique 52 exerce un couple de torsion sur le mât 44, tendant à ramener ledit mât dans la première position angulaire par rapport au corps. Le deuxième élément de rappel élastique 52 est par exemple un ressort de torsion, reçu à l'intérieur du corps 42.

Les éléments de rappel élastiques permettent d'obtenir un dispositif réversible. Ainsi, le détecteur de lancement 25 peut être réarmé et utilisé plusieurs fois, tout comme le projectile 12.

Le premier 50 et le deuxième 54 capteurs sont reliés au module électronique 22 du projectile 12. Le premier capteur 50 est apte à déterminer si le mât 44 est en configuration rétractée et/ou si le mât 44 est en configuration déployée. Le deuxième capteur 54 est apte à déterminer si le mât 44 et la pale 46 sont ou non dans la première position angulaire, et/ou si le mât 44 et la pale 46 sont ou non dans la deuxième position angulaire. Le premier 50 et le deuxième 54 capteurs sont par exemple des capteurs TOR mécaniques.

Comme visible sur la figure 3, le corps 42 du détecteur 25 est logé à l'intérieur de la coque 16 du projectile 12, l'axe principal 40 dudit détecteur étant disposé perpendiculairement à l'axe 26 de déplacement dudit projectile 12.

En outre, le mât 44 du détecteur 25 est apte à coulisser dans une cavité 70 ménagée à l'intérieur de l'aileron 18 du projectile 12, ledit aileron 18 comprenant le bord latéral 30 décrit ci-dessus. La cavité 70 débouche sur ledit bord latéral 30.

Dans la configuration rétractée du mât 44, la pale 46 est complètement reçue dans la cavité 70 et la surface d'extrémité 60 de ladite pale affleure le bord latéral 30 de l'aileron 18. Dans la configuration déployée du mât 44, comme visible sur la figure 3, la pale 46 forme une saillie selon l'axe principal 40 par rapport audit bord latéral 30.

Dans la première position angulaire de la pale 46, comme visible sur la figure 2, la première face latérale 62 de ladite pale est sensiblement perpendiculaire à l'axe de déplacement 26 et orientée vers l'avant du projectile 12. Dans la deuxième position angulaire de la pale 46, comme visible sur la figure 3, la pale est sensiblement orientée vers l'arrière du projectile 12, le plan médian 66 de ladite pale étant sensiblement parallèle à l'axe de déplacement 26.

Le tube de lancement 14 de l'ensemble de lancement 10 va à présent être décrit.

Le tube de lancement 14 comprend une chambre interne 80 et un dispositif de lancement 82. La chambre interne 80, apte à contenir le projectile 12, présente une forme allongée selon un axe 84 et comporte une ouverture 86 à une extrémité. Le dispositif de lancement 82, disposé à l'autre extrémité de la chambre interne 80, est apte à éjecter le projectile 12 hors du tube de lancement par l'ouverture 86. Le dispositif de lancement 82 comporte par exemple un refouloir pneumatique, comme décrit dans le document WO2017162602.

La figure 1 représente l'ensemble de lancement 10 dans une configuration initiale, dans laquelle le projectile 12 est reçu dans la chambre interne 80.

La chambre interne 80 comprend une surface interne configurée de sorte que, dans la configuration initiale, ladite surface interne est au contact de la surface d'extrémité 60 de la pale 46 du détecteur de lancement 25.

Dans le mode de réalisation représenté, ladite surface interne de la chambre interne 80 comprend au moins un rail de guidage 88, s'étendant selon l'axe 84 de la chambre interne 80. Dans la configuration initiale, le mât 44 du détecteur 25 est en configuration rétractée ; le rail de guidage 88 est au contact de la surface d'extrémité 60 de la pale 46, ainsi que du bord latéral 30 de l'aileron 18 recevant ladite pale.

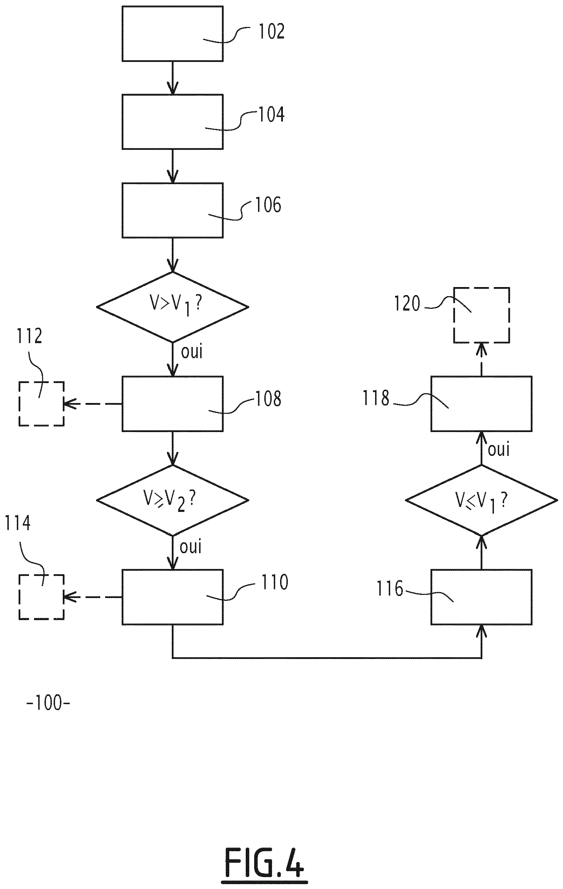

Un procédé 100 de mise en oeuvre de l'ensemble de lancement 10 ci-dessus va maintenant être décrit. Ledit procédé 100 est schématiquement représenté à la figure 4.

Dans un état initial du procédé 100, l'ensemble de lancement 10, équipant par exemple un sous-marin, est dans un environnement immergé. En particulier, le tube de lancement 14 est disposé sous l'eau, la chambre interne 80 est remplie d'eau et l'ouverture 86 débouche par exemple sous la surface de la mer. Par ailleurs, le projectile 12 est reçu dans le tube de lancement 14, dans la configuration initiale précédemment décrite. Le moteur de l'élément de propulsion 20 dudit projectile est à l'arrêt.

Dans une première étape 102 du procédé, le dispositif de lancement 82 du tube de lancement 14 éjecte le projectile 12 à l'extérieur de la chambre interne 80, par l'ouverture 86. La première étape 102 est par exemple déclenchée par le poste de contrôle du projectile 12.

L'aileron 18 étant sorti de la chambre interne 80, la surface supérieure 60 de la pale 46 du détecteur 25 n'est plus en contact avec le rail de guidage 88. Le premier élément de rappel élastique 48 se détend, faisant passer le mât 44 de la configuration rétractée à la configuration déployée.

Les étapes suivantes du procédé correspondent à un programme exécuté par le module électronique 22 du projectile 12.

Le mât 44 étant en configuration déployée, le premier capteur 50 envoie au module électronique 22 un signal correspondant (étape 104), indiquant l'éjection du projectile 12. Ledit module électronique 22 met alors en route le moteur de l'élément de propulsion 20 (étape 106), conduisant au déplacement sous-marin du projectile 12 selon l'axe de déplacement 26.

L'eau traversée par le projectile 12 exerce sur la pale 46 un effort orienté vers l'arrière dudit projectile selon l'axe de déplacement 26. Cet effort va à l'encontre du couple exercé par le deuxième élément de rappel élastique 52.

Au-delà d'une première vitesse seuil, notée V₁, du projectile 12, l'effort exercé sur la première face latérale 62 de la pale 46 tend à faire pivoter ladite première face latérale 62, la pale 46 s'écartant alors de la première position angulaire. De préférence, le détecteur 25 est configuré pour que la première vitesse seuil V₁ soit de l'ordre de 5 km/h.

Selon un mode de réalisation, lorsque la pale 46 s'écarte de ladite première position angulaire, le deuxième capteur 52 envoie au module électronique 22 un premier signal d'avertissement (étape 108).

Par ailleurs, au-delà d'une deuxième vitesse seuil, supérieure à V₁ et notée V₂, l'effort exercé sur la première face latérale 62 est tel que la pale 46 atteint la deuxième position angulaire de la figure 3. La deuxième position angulaire est une position d'équilibre, dans lequel les écoulements le long des première 62 et deuxième 64 faces latérales de la pale exercent des efforts qui se compensent perpendiculairement à l'axe de déplacement 26. Dans ladite deuxième position angulaire, le plan médian 66 de la pale 46 est sensiblement coplanaire avec l'axe de déplacement 26. De préférence, le détecteur 25 est configuré pour que la deuxième vitesse seuil V₂ soit de l'ordre de 15 km/h.

Selon un mode de réalisation, lorsque la pale 46 atteint la deuxième position angulaire, le deuxième capteur 52 envoie au module électronique 22 un deuxième signal d'avertissement (étape 110).

Le module électronique 22 est ainsi en mesure de relayer au poste de contrôle l'information selon laquelle la première V₁ et/ou la deuxième V₂ vitesse seuil est atteinte par le projectile 12 (étapes 112, 114). Le bon fonctionnement du projectile 12 est ainsi vérifié.

En particulier, l'information selon laquelle la deuxième vitesse V₂ est atteinte permet de confirmer que la propulsion du projectile 12 est correctement activée et que le projectile 12 a libéré l'espace devant le tube de lancement 14 et, de façon générale, devant le navire.

La configuration du détecteur 25 favorise l'écoulement laminaire le long de la pale 46 en configuration déployée, ainsi que sur l'aileron 18. La présence du détecteur 25 minimise donc les phénomènes de cavitation et ne risque pas de perturber le déplacement du projectile 12, notamment le fonctionnement des hélices. De même, la présence et les mouvements du détecteur 25 génèrent peu de bruits parasites lors du déplacement du projectile 12.

Dans une étape suivante du procédé, correspondant à une fin de mission du projectile 12, le module électronique 22 arrête le moteur de l'élément de propulsion 20 (étape 116). Le projectile 12 ralentit, ce qui diminue l'écoulement d'eau sur la pale 46. Ladite pale retourne donc progressivement dans la première position angulaire.

Le deuxième capteur 52 envoie alors au module électronique 22 un nouveau signal (étape 118) indiquant que la vitesse du projectile 12 est inférieure à la première vitesse seuil V₁.

De préférence, la pale 46 et le deuxième élément de rappel élastique 52 sont configurés de sorte que la première vitesse seuil V₁ corresponde à un seuil en-dessous duquel des opérateurs peuvent approcher sans danger le projectile 12 pour le récupérer dans l'eau.

Suite à l'étape 118, le module électronique 22 est donc en mesure d'avertir le poste de contrôle de la fin de mission du projectile 12 (étape 120), afin que ce projectile soit récupéré en mer.

Dans un mode de réalisation particulier, lorsque le deuxième capteur 52 envoie un signal indiquant que la vitesse du projectile 12 est inférieure à la première vitesse seuil V₁, le module électronique 22 déclenche une balise de localisation (non représentée) permettant de faciliter la récupération du projectile 12.

## Revendications

1. Détecteur (25) de lancement d'un projectile, comprenant :
- un corps (42) disposé selon un premier axe (40) ;
- un mât (44) s'étendant selon le premier axe, ledit mât comprenant une première (56) et une seconde extrémités, respectivement disposées à l'intérieur et à l'extérieur du corps ; et
- une pale (46) solidaire de la seconde extrémité du mât et s'étendant radialement par rapport audit mât,
ladite pale comportant : une première (62) et une deuxième (64) faces opposées, parallèles au premier axe ; et une surface d'extrémité (60), sensiblement perpendiculaire au premier axe et opposée au corps ;
le mât étant apte à coulisser par rapport au corps selon le premier axe, entre une configuration rétractée et une configuration déployée, la pale étant axialement plus proche du corps dans la configuration rétractée que dans la configuration déployée ;
le mât étant en outre apte à pivoter par rapport au corps autour du premier axe, entre une première et une deuxième positions angulaires ;
le détecteur comprenant en outre :
- un premier élément de rappel élastique (48), tendant à ramener le mât en configuration déployée par rapport au corps ;
- un premier capteur (50), apte à déterminer si le mât est en configuration rétractée ou en configuration déployée ;
- un deuxième élément de rappel élastique (52), tendant à ramener le mât dans la première position angulaire par rapport au corps ; et
- un deuxième capteur (54), apte à déterminer si le mât est dans la première ou dans la deuxième position angulaire.

2. Détecteur de lancement selon la revendication 1, dans lequel le premier élément de rappel élastique (48) est un ressort de compression.

3. Détecteur de lancement selon la revendication 1 ou la revendication 2, dans lequel le deuxième élément de rappel élastique (52) est un ressort de torsion.

4. Détecteur de lancement selon l'une des revendications précédentes, dans lequel les première (62) et deuxième (64) faces de la pale forment un angle (α) non nul et préférentiellement inférieur ou égal à 25°.

5. Projectile (12) s'étendant selon un deuxième axe (26) et comprenant : une surface latérale externe (30), sensiblement parallèle audit deuxième axe ; un élément de propulsion selon un sens de déplacement parallèle audit deuxième axe ; et un module électronique (22) de commande et de contrôle, relié audit élément de propulsion ;
ledit projectile comprenant en outre un détecteur de lancement (25) selon l'une des revendications précédentes, le corps (42) dudit détecteur étant fixe par rapport à la surface latérale externe dudit projectile, le premier axe (40) étant sensiblement perpendiculaire au deuxième axe ;
les premier (50) et deuxième (54) capteurs dudit détecteur de lancement étant reliés au module électronique ;
le détecteur de lancement étant configuré de sorte qu'en configuration déployée du mât (44), la surface d'extrémité (60) de la pale forme une saillie par rapport à la surface latérale externe (30) du projectile.

6. Projectile selon la revendication 5, dans lequel le détecteur de lancement (25) est configuré de sorte qu'en première position angulaire du mât, la première face (62) de la pale est sensiblement perpendiculaire au deuxième axe (26) et orientée vers l'avant, selon le sens de déplacement.

7. Projectile selon la revendication 5 ou la revendication 6, comprenant : une coque (16) s'étendant selon le deuxième axe ; et un aileron (18) s'étendant radialement par rapport à une extrémité arrière de ladite coque ; la coque et/ou l'aileron comprenant la surface latérale externe (30) ; ledit projectile étant apte à se déplacer en milieu sous-marin.

8. Projectile selon la revendication 7, dans lequel le corps (42) du détecteur de lancement (25) est inséré dans la coque (16) et la seconde extrémité du mât (44) est apte à coulisser dans une cavité interne (70) de l'aileron (18) entre les configurations rétractée et déployée.

9. Ensemble (10) de lancement comprenant : un projectile (12) selon l'une des revendications 5 à 8 ; et un tube de lancement (14) comprenant une chambre interne (80) apte à contenir ledit projectile ; la chambre interne comprenant une surface interne (88) configurée de sorte que, lorsque le projectile est reçu dans la chambre interne, la surface d'extrémité (60) de la pale du détecteur de lancement est au contact de ladite surface interne, le mât (44) du détecteur de lancement étant ainsi maintenu en configuration rétractée.

10. Procédé (100) de mise en oeuvre de l'ensemble de lancement (10) selon la revendication 9, ledit procédé comprenant les étapes suivantes :
- éjection (102) du projectile (12) hors du tube de lancement (14) ;
- coulissement du mât (44) du détecteur de lancement (25) en configuration déployée ;
- détection dudit coulissement par le premier capteur (50) et envoi (104) d'un signal correspondant au module électronique (22) ;
- mise en route (106) de l'élément de propulsion (20) par le module électronique.

11. Procédé (100) de fonctionnement d'un projectile (12) selon l'une des revendications 5 à 8, ledit procédé comprenant les étapes suivantes :
- mise en route (106) de l'élément de propulsion (20) par le module électronique ;
- si le mât (44) atteint la deuxième position angulaire par rapport au corps, détection par le deuxième capteur (54) et envoi (110) d'un signal correspondant au module électronique (22) ; puis
- si le mât (44) retrouve la première position angulaire par rapport au corps, détection par le deuxième capteur (54) et envoi (118) d'un signal correspondant au module électronique (22).

## Patentansprüche

1. Abschussdetektor (25) eines Projektils, umfassend:
- einen Körper (42), der entlang einer ersten Achse (40) angeordnet ist;
- einen Mast (44), der sich entlang der ersten Achse erstreckt, der Mast umfassend ein erstes (56) und ein zweites Ende, die jeweils innerhalb und außerhalb des Körpers angeordnet sind; und
- ein Blatt (46), das fest mit dem zweiten Ende des Masts verbunden ist und sich radial in Bezug auf diesen Mast erstreckt,
das Blatt umfassend: eine erste (62) und eine zweite (64) gegenüberliegende Seite parallel zu der ersten Achse; und eine Endfläche (60), die im Wesentlichen senkrecht zur ersten Achse und gegenüber dem Körper ist;
wobei der Mast geeignet ist, in Bezug auf den Körper entlang der ersten Achse zwischen einer eingezogenen Konfiguration und einer ausgefahrenen Konfiguration zu gleiten, wobei das Blatt in der eingezogenen Konfiguration axial näher an dem Körper ist als in der ausgefahrenen Konfiguration;
wobei der Mast ferner geeignet ist, um in Bezug auf den Körper zwischen einer ersten und einer zweiten Winkelposition um die erste Achse zu schwenken;
der Detektor ferner umfassend:
- ein erstes elastisches Rückholelement (48), das dazu neigt, den Mast in Bezug auf den Körper in eine ausgefahrene Konfiguration zurückzubringen;
- einen ersten Sensor (50), der geeignet ist, um zu bestimmen, ob der Mast in einer eingefahrenen oder einer ausgefahrenen Konfiguration ist;
- ein zweites elastisches Rückholelement (52), das dazu neigt, den Mast in Bezug auf den Körper in die erste Winkelposition zurückzubringen; und
- einen zweiten Sensor (54), der geeignet ist, um zu bestimmen, ob der Mast in der ersten oder der zweiten Winkelposition ist.

2. Abschussdetektor nach Anspruch 1, wobei das erste elastische Rückstellelement (48) eine Druckfeder ist.

3. Abschussdetektor nach Anspruch 1 oder Anspruch 2, wobei das zweite elastische Rückholelement (52) eine Torsionsfeder ist.

4. Abschussdetektor nach einem der vorherigen Ansprüche, wobei die erste (62) und die zweite (64) Seite des Blatts einen Winkel (a) ungleich Null und vorzugsweise kleiner als oder gleich wie 25° bilden.

5. Projektil (12), das sich entlang einer zweiten Achse (26) erstreckt und Folgendes umfasst: eine äußere Seitenfläche (30) im Wesentlichen parallel zu der zweiten Achse; ein Antriebselement in einer Bewegungsrichtung parallel zu der zweiten Achse; und ein elektronisches Steuer- und Kontrollmodul (22), das mit dem Antriebselement verbunden ist;
das Projektil ferner umfassend einen Abschussdetektor (25) nach einem der vorherigen Ansprüche, wobei der Körper (42) des Detektors in Bezug auf die äußere Seitenfläche des Projektils feststehend ist und die erste Achse (40) im Wesentlichen senkrecht zu der zweiten Achse ist;
wobei der erste (50) und der zweite (54) Sensor des Abschussdetektors mit dem Elektronikmodul verbunden sind;
wobei der Abschussdetektor konfiguriert ist, sodass in der ausgefahrenen Konfiguration des Masts (44) die Endfläche (60) des Blatts einen Vorsprung in Bezug auf die äußere Seitenfläche (30) des Projektils bildet.

6. Projektil nach Anspruch 5, wobei der Abschussdetektor (25) konfiguriert ist, sodass die erste Seite (62) des Blatts in der ersten Winkelposition des Masts im Wesentlichen senkrecht zu der zweiten Achse (26) und in Bewegungsrichtung nach vorne ausgerichtet ist.

7. Projektil nach Anspruch 5 oder Anspruch 6, umfassend: einen Rumpf (16), der sich entlang der zweiten Achse erstreckt; und eine Flügelspitze (18), die sich radial zu einem hinteren Ende des Rumpfs erstreckt; wobei der Rumpf und/oder die Flügelspitze die äußere Seitenfläche (30) umfassen; wobei das Projektil geeignet ist, sich in einer Unterwasserumgebung zu bewegen.

8. Projektil nach Anspruch 7, wobei der Körper (42) des Abschusssensors (25) in den Rumpf (16) eingesetzt ist und das zweite Ende des Masts (44) in einem inneren Hohlraum (70) der Flügelspitze (18) zwischen der eingefahrenen und der ausgefahrenen Konfiguration verschiebbar ist.

9. Abschussanordnung (10), umfassend: ein Projektil (12) nach einem der Ansprüche 5 bis 8; und ein Abschussrohr (14), umfassend eine Innenkammer (80), die geeignet ist, um das Projektil aufzunehmen; die Innenkammer umfassend eine Innenfläche (88), die konfiguriert ist, sodass, wenn das Projektil in der Innenkammer aufgenommen ist, die Endfläche (60) des Abschussdetektorblatts die Innenfläche berührt, wodurch der Abschussdetektormast (44) in einer eingefahrenen Konfiguration gehalten wird.

10. Verfahren (100) zum Betreiben der Abschussanordnung (10) nach Anspruch 9, das Verfahren umfassend die folgenden Schritte:
- Auswerfen (102) des Projektils (12) aus dem Abschussrohr (14);
- Verschieben des Masts (44) des Abschussdetektors (25) in die ausgefahrene Konfiguration;
- Erfassen des Verschiebens durch den ersten Sensor (50) und Senden (104) eines entsprechenden Signals an das elektronische Modul (22);
- Einschalten (106) des Antriebselements (20) durch das Elektronikmodul.

11. Verfahren (100) zum Betreiben eines Projektils (12) nach einem der Ansprüche 5 bis 8, das Verfahren umfassend die folgenden Schritte:
- Einschalten (106) des Antriebselements (20) durch das Elektronikmodul;
- wenn der Mast (44) die zweite Winkelposition in Bezug auf den Körper erreicht, Erfassen, durch den zweiten Sensor (54), und Senden (110) eines Signals, das dem elektronischen Modul (22) entspricht und dessen Senden; dann
- wenn der Mast (44) wieder die erste Winkelposition in Bezug auf den Körper einnimmt, Erfassen, durch den zweiten Sensor (54) eines Signals, das dem elektronischen Modul (22) entspricht, und dessen Senden (118).

## Claims

1. A projectile launch detector (25), comprising:
- a body (42) arranged along a first axis (40);
- a mast (44) extending along the first axis, said mast comprising a first (56) and a second end, respectively arranged inside and outside the body; and
- a blade (46) secured to the second end of the mast and extending radially relative to said mast,
- said blade including: first (62) and second (64) opposite faces, parallel to the first axis; and an end surface (60), substantially perpendicular to the first axis and opposite the body;
the mast being able to slide relative to the body along the first axis, between a retracted configuration and a deployed configuration, the blade being axially closer to the body in the retracted configuration than in the deployed configuration;
the mast further being able to pivot relative to the body about the first axis, between a first and a second angular position;
the detector further comprising:
- a first elastic return element (48), returning said mast to the deployed configuration relative to the body;
- a first sensor (50), able to determine whether the mast is in the retracted configuration or in the deployed configuration;
- a second elastic return element (52), returning said mast to the first angular position relative to the body; and
- a second sensor (54), able to determine whether the mast is in the first or the second angular position.

2. The launch detector according to claim 1, wherein the first elastic return element (48) is a compression spring.

3. The launch detector according to claim 1 or claim 2, wherein the second elastic return element (52) is a torsion spring.

4. The launch detector according to one of the preceding claims, wherein the first (62) and second (64) faces of the blade form a non-zero angle (α) and preferably an angle of less than or equal to 25°.

5. A projectile (12) extending along a second axis (26) and comprising: an outer lateral surface (30), substantially parallel to said second axis; a propulsion element along a movement direction parallel to said second axis; and an electronic command and control module (22), connected to said propulsion element;
said projectile further comprising a launch detector (25) according to one of the preceding claims, the body (42) of said detector being stationary relative to the outer lateral surface of said projectile, the first axis (40) being substantially perpendicular to the second axis;
the first (50) and second (54) sensors of said launch detector being connected to the electronic module;
the launch detector being configured such that in the deployed configuration of the mast (44), the end surface (60) of the blade forms a protrusion relative to the outer lateral surface (30) of the projectile.

6. The projectile according to claim 5, wherein the launch detector (25) is configured such that in the first angular position of the mast, the first face (62) of the blade is substantially perpendicular to the second axis (26) and oriented toward the front, along the movement direction.

7. The projectile according to claim 5 or claim 6, comprising: a casing (16) extending along the second axis; and an aileron (18) extending radially relative to a rear end of said casing; the casing and/or the aileron comprising the outer lateral surface (30); said projectile being able to move in an underwater environment.

8. The projectile according to claim 7, wherein the body (42) of the launch detector (25) is inserted into the casing (16) and the second end of the mast (44) is able to slide in an inner cavity (70) of the aileron (18) between the retracted and deployed configurations.

9. A launcher assembly (10) comprising: a projectile (12) according to one of claims 5 to 8; and a launching tube (14) comprising an inner chamber (80) able to contain said projectile; the inner chamber comprising an inner surface (88) configured such that, when the projectile is received in the inner chamber, the end surface (60) of the blade of the launch detector is in contact with said inner surface, the mast (44) of the launch detector thus being kept in the retracted configuration.

10. A method (100) for implementing the launcher assembly (10) according to claim 9, said method comprising the following steps:
- ejecting (102) the projectile (12) from the launching tube (14);
- sliding the mast (44) of the launch detector (25) into the deployed configuration;
- detecting said sliding via the first sensor (50) and sending (104) a corresponding signal to the electronic module (22);
- initiating (106) the propulsion element (20) via the electronic module.

11. An operating method (100) of a projectile (12) according to one of claims 5 to 8, said method comprising the following steps:
- initiating (106) the propulsion element (20) via the electronic module;
- if the mast (44) reaches the second angular position relative to the body, detection via the second sensor (54) and sending (110) a corresponding signal to the electronic module (22); then,
- if the mast (44) returns to the first angular position relative to the body, detection via the second sensor (54) and sending (118) a corresponding signal to the electronic module (22).
